# EUROPÄISCHE PATENTSCHRIFT

(11) **EP 0 360 022 B1**
(45) Veröffentlichungstag und Bekanntmachung des Hinweises auf die Patenterteilung: **10.11.1993**
(21) Anmeldenummer: 89115584.8
(22) Anmeldetag: 23.08.1989
(51) Int. Cl.: H04L 12/28, H04Q 9/00

(54) **Schaltungsanordnung für Fernmeldeanlagen, insbesondere Fernsprechvermittlungsanlagen, in denen individuelle Schaltungsanordnungen von einer gemeinsamen Schalteinrichtung zyklisch angesteuert werden**
Circuit arrangement for telecommunication installations, particularly telephone exchanges, in which individual circuit arrangements are cyclically activated by a common switching device
Circuit pour installations de télécommunication en particulier autocommutateurs dans lesquels des équipements individuels sont cycliquement commandés par un équipement commun

(30) Priorität: 09.09.1988 DE 3830798
(43) Veröffentlichungstag der Anmeldung: 28.03.1990
(73) Patentinhaber: SIEMENS AKTIENGESELLSCHAFT, 80333 München (DE)
(72) Erfinder: Prey, Gerhard, D-8031 Eichenau (DE)

(56) Entgegenhaltungen:
- EP-A- 0 103 335
- EP-A- 0 133 577
- DE-A- 2 620 493
- PATENT ABSTRACTS OF JAPAN, Band 5, Nr. 63 (E-54)[735], 28. April 1981, Seite 140 E-54 & JP-A-56 13 856
- PATENT ABSTRACTS OF JAPAN, Band 3, Nr. 47 (E-105), 20. April 1979, Seite 157 E-105 & JP-A-54 25 602
- "Micro Communications Handbook", Nov. 1986, ab Seite 2-1

## Beschreibung

Die Erfindung betrifft ein Schaltungssystem für Fernmeldeanlagen, insbesondere Fernsprechvermittlungsanlagen,
- in dem eine Mehrzahl von Schalteinrichtungen untereinander Nachrichten austauschen und
- in dem eine Schalteinrichtung die anderen Schalteinrichtungen zyklisch nacheinander ansteuert und
- in dem eine angesteuerte Schalteinrichtung die Absicht, Nachrichten an die ansteuernde Schalteinrichtung abzugeben, durch Anlegung eines ersten Binärzeichens (logisch 1) anzeigt und
- in dem die ansteuernde Schalteinrichtung an eine angesteuerte Schalteinrichtung, von der sie ein erstes Binärzeichen empfangen hat, ein Startsignal abgibt, woraufhin die angesteuerte Schalteinrichtung die jeweiligen Nachrichten an die ansteuernde Schalteinrichtung übermittelt.

Aus der EP-A-0 103 335 ist ein Schaltungssystem für eine Fernsprechvermittlungseinrichtung bekannt, bei dem eine Mehrzahl von Schalteinrichtungen auf direktem Wege untereinander in Verbindung stehen. Eine Schalteinrichtung, die eine Nachricht abzugeben beabsichtigt, legt ein Signal vorgegebener Polarität auf die Leitung, die zu der gewünschten Schalteinrichtung führt. Sämtliche Schalteinrichtungen fragen die Nachrichten zu ihnen führenden Leitungen zyklisch ab. Eine Schalteinrichtung, die das Signal vorgegebener Polarität auf einer Leitung detektiert, bleibt mit dieser Leitung verbunden und gibt an die mit dieser Leitung verbundene Schalteinrichtung ein Startsignal für die Übertragung der Nachricht ab. Bei diesem Schaltungssystem tauschen also eine Mehrzahl gleichberechtigter Schalteinheiten Nachrichten aus, wobei die Übertragung von Nachrichten während eines Übertragungsvorgangs regelmäßig nur von der nachrichtenabgebenden Schalteinrichtung zur nachrichtenempfangenden Schalteinrichtung erfolgt.

Der Erfindungsgegenstand bedient sich der weiteren Merkmale, wonach mehrere individuelle dezentrale Schalteinrichtungen nur von einer diesen gemeinsamen zentralen Schalteinrichtung zyklisch angesteuert werden und wonach von der zentralen Schalteinrichtung an die dezentralen Schalteinrichtungen abgegebenen Nachrichten durch Befehle gegeben sind und wonach die von den dezentralen Schalteinrichtungen an die zentrale Schalteinrichtung abgegebenen Nachrichten durch Informationen gegeben sind und wonach die zentrale Schalteinrichtung mit jeder der dezentralen Schalteinrichtungen zum Start für eine Befehlsabgabe und/oder einen Informationsabruf und -empfang Vorinformationen austauscht, durch die bezüglich einer Abgabe bzw. eines Empfanges eines Befehles bzw. einer Information eine Bereitschaft oder Nichtbereitschaft angezeigt wird und durch deren Auswertung eine Übermittlung eines Befehles oder einer Information gestartet wird oder unterbleibt, wobei eine mit dem Startsignal angesteuerte dezentrale Schalteinrichtung bei einer Bereitschaft zum Empfang eines Befehles ein Startquittungssignal an die zentrale Schalteinrichtung zurückgibt.

In diesem Zusammenhang sei auf das "Micro Communication Handbook" der Firma Intel Corporation (Order No. 231658-003), ausgegeben im November 1986, ab Seite 2-1, hingewiesen, in dem für den Aufbau einer Nachrichtenverbindung zwischen zwei Schalteinheiten der Austausch von Vorinformationen in prinzipieller Weise beschrieben ist. In der EP-A-0 197 290 ist das Prinzip des Austausches und der Bedeutung der Vorinformationen besonders ausführlich beschrieben. Bei einem Schaltungssystem der oben umrissenen Art ergibt sich also aus den ausgetauschten Vorinformationen, welche Befehle und/oder welche Informationen zwischen der zentralen, im folgenden als Schalteinrichtung bezeichneten, Schalteinrichtung und der betreffenden dezentralen, im folgenden als Schaltglied bezeichneten, Schalteinrichtung übermittelt werden können. Der Austausch der Vorinformationen wird immer dadurch gestartet, daß die Schalteinrichtung das Startsignal zu dem jeweils betreffenden Schaltglied hin abgibt und dieses hierauf das Startquittungssignal zurückgibt, wodurch die Schalteinrichtung erkennt, daß das betreffende Schaltglied zur Aufnahme der Vorinformationen bereit ist. Die Vorinformationen geben die Möglichkeit, die übermittelbaren Nachrichten in mehrere Nachrichtenarten zu unterscheiden, also sowohl mehrere Arten von Informationen als auch mehrere Arten von Befehlen voneinander. Mittels der Vorinformationen kann dann geprüft werden, für welche Nachrichtenarten die Möglichkeit einer Übermittlung jeweils besteht oder nicht. Dies hängt nicht nur davon ab, ob Nachrichten der betreffenden Nachrichtenarten zur Übermittlung anstehen, sondern auch davon, ob Nachrichten der betreffenden Nachrichtenarten jeweils auch von der betreffenden Gegenseite aufgenommen werden können.

Wie weiter oben angegeben worden ist, steuert die genannte Schalteinrichtung zyklisch nacheinander die individuellen Schaltglieder an. Die Schalteinrichtung steht also zu jeweils einem Zeitpunkt immer nur mit einem der Schaltglieder in Verbindung. Es können nun Betriebssituationen auftreten, in denen sich bei Ansteuerung jeweils eines Schaltgliedes durch die Schalteinrichtung herausstellt, daß nicht nur kein Befehl von der Schalteinrichtung an das betreffende Schaltglied abzugeben ist, sondern auch keine Information in dem betreffenden Schaltglied vorliegt, die durch die Schalteinrichtung abzurufen und aufzunehmen wäre. In allen diesen Fällen wird also nach dem Austausch von Startsignal und Startquittungssignal der Austausch der Vorinformationen abgewickelt. Dessen Ergebnis sagt dann, ob durch die Schalteinrichtung ein Befehl an das betreffende Schaltglied zu übermitteln ist und/oder ob eine Information von dort abzurufen ist. Trifft beides nicht zu, so steuert die Schalteinrichtung dann das im Ansteuerungszyklus nächstfolgende Schaltglied an.

Der Erfindung liegt das Problem zugrunde, für ein Schaltungssystem, in dem eine Mehrzahl individueller, dezentraler Schalteinrichtungen nur von einer diesen gemeinsamen zentralen Schalteinrichtung zyklisch angesteuert werden, die Arbeitsweise der zyklischen Ansteuerung so zu gestalten, daß der mittlere Zeitbedarf der zyklischen Abfrage abgekürzt wird.

Das Problem wird bei dem eingangs dargestellten Schaltungssystem durch die Weiterbildung mittels der Merkmale gelöst,
- daß mehrere individuelle dezentrale Schalteinrichtungen (C..Cx) nur von einer diesen gemeinsamen zentralen Schalteinrichtung (A) zyklisch angesteuert werden und
- daß die Nachrichten, die die zentrale Schalteinrichtung an die dezentralen Schalteinrichtungen abzugeben vermag, durch Befehle gegeben sind und
- daß die Nachrichten, die die dezentralen Schalteinrichtungen an die zentrale Schalteinrichtung abzugeben vermögen, durch Informationen gegeben sind und
- daß die zentrale Schalteinrichtung mit jeder der dezentralen Schalteinrichtungen zum Start für eine Befehlsabgabe und/oder einen Informationsabruf und Empfang Vorinformationen austauscht, durch die bezüglich einer Abgabe bzw. eines Empfanges eines Befehles bzw. einer Information eine Bereitschaft oder Nichtbereitschaft angezeigt wird und durch deren Auswertung eine Übermittlung eines Befehles oder einer Information gestartet wird oder unterbleibt, wobei eine mit einem Startsignal angesteuerte dezentrale Schalteinrichtung bei einer Bereitschaft zum Empfang eines Befehles ein Startquittungssignal an die zentrale Schalteinrichtung zurückgibt und
- daß die zentrale Schalteinrichtung die jeweilige Ansteuerung einer dezentralen Schalteinrichtung beendet und dann die in zyklischer Folge nächste dezentrale Schalteinrichtung ansteuert, wenn die gerade angesteuerte dezentrale Schalteinrichtung durch Anlegen eines zweiten Binärzeichens (logisch 0) ein Nichtvorliegen einer Information zur Abgabe an die zentrale Schalteinrichtung anzeigt und die zentrale Steuereinrichtung keine Befehle an diese dezentrale Schalteinrichtung abzugeben hat und
- daß die zentrale Schalteinrichtung im Falle der Ansteuerung einer dezentralen Schalteinrichtung, in der das zweite Binärsignal angelegt ist, nur dann, wenn sie selbst einen Befehl an die betreffende dezentrale Schalteinrichtung abzugeben hat, das Startsignal abgibt, woraufhin die angesteuerte dezentrale Schalteinrichtung die Abgabe des Startquittungssignales zunächst durch Zeichenlagewechsel vom zweiten Binärsignal zum ersten Binärsignal vorbereitet und dann durch erneuten Zeichenlagenwechsel vom ersten Binärsignal zum zweiten Binärsignal durchführt.

Durch die Erfindung wird erreicht, daß in allen den Fällen, in denen ein individuelles Schaltglied keine Information an die Schalteinrichtung abzugeben hat und in denen auch die Schalteinrichtung keinen Befehl an das betreffende individuelle Schaltglied abzugeben hat, der Austausch Von Startsignal/Startquittungssignal sowie der Vorinformationen entfallen kann. In diesen Fällen wird also ein wesentlicher Zeitgewinn erzielt. Die Ansteuerungszyklen der gemeinsamen Schalteinrichtung werden dadurch insgesamt in vorteilhafter Weise abgekürzt, und die angesteuerte Einheit wird von einer Bearbeitung entlastet.

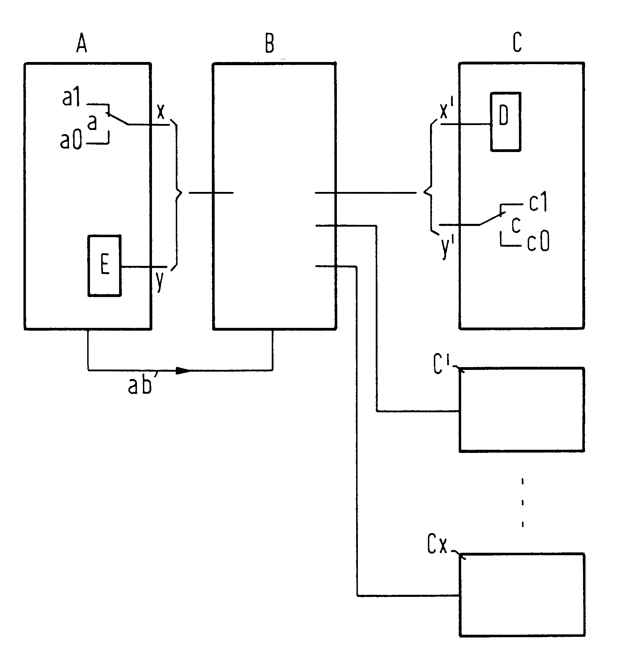

In der Zeichnung ist ein Ausführungsbeispiel der Erfindung nur in wesentlich zu ihrem Verständnis beitragenden Bestandteilen dargestellt, worauf dieselbe jedoch keineswegs beschränkt ist.

Es ist eine Mehrzahl von individuellen Schaltgliedern C, C', ..., Cx vorgesehen, die von einer ihnen gemeinsamen, einem Nachrichtenaustausch dienenden Schalteinrichtung A zyklisch nacheinander angesteuert werden. Diese Ansteuerung erfolgt in an sich bekannter Weise mit Hilfe einer Koppeleinrichtung B. Diese kann nach dem Raumvielfachprinzip und/oder dem Zeitvielfachprinzip arbeiten. Sie wird gesteuert über eine Steuerleitung ab in der Weise, daß die Schalteinrichtung A gleichzeitig immer nur mit einem einzigen der Schaltglieder C bis Cx verbunden ist.

Die Schalteinrichtung A steuert also zyklisch nacheinander die Schaltglieder C bis Cx an. Die Schalteinrichtung A gibt in Form von Binärzeichen Befehle an die Schaltglieder C bis Cx ab und ruft Informationen von jenen ab und empfängt sie, wenn diese sie über den mittels der Koppeleinrichtung B durchgeschalteten Verbindungsweg aussenden. Bei dem Abgeben von Befehlen und beim Abrufen und Empfangen von Informationen handelt es sich immer um eine Nachrichtenübermittlung entweder von der Schalteinrichtung zu einem der Schaltglieder oder in umgekehrter Richtung. Für eine derartige Nachrichtenübermittlung gibt die Schalteinrichtung A ein Startsignal zu dem jeweils betreffenden Schaltglied hin ab und dieses gibt hierauf ein Startquittungssignal zurück, wobei beide Signale durch Zeichenlagewechsel gebildet sind. Zur Abgabe eines Startsignals von der Schalteinrichtung A an ein Schaltglied dient ein Sendekontakt a. Mit Hilfe dieses Sendekontaktes werden auch Befehle von der Schalteinrichtung zu dem betreffenden Schaltglied übertragen. Mit Hilfe dieses Sendekontaktes, der vorzugsweise auch als elektronisch arbeitender Schalter ausgebildet sein kann, können Signale in zwei Zeichenlagen übertragen werden, und zwar in einer ersten Zeichenlage, die einer logischen 1 entsprechen möge und einer zweiten Zeichenlage, die einer logischen 0 entsprechen möge. Diesen beiden Zeichenlagen entsprechen die Sendekontakt-Ruheseite al und die Sendekontakt-Arbeitsseite a0, die in der Zeichnung angegeben sind.

Zunächst möge sich der Sendekontakt a in der dargestellten Ruhelage befinden. Über ihn und den Kanal x gibt er also zunächst die Zeichenlage a1 ab. Im Empfänger D im Schaltglied C, das also über die Koppeleinrichtung B im betrachteten Betriebszustand mit der Schalteinrichtung A verbunden sein möge, wird also zunächst ein Signal mit der Zeichenlage al empfangen, nachdem im Zuge der zyklisch nacheinander erfolgenden Ansteuerung der Schaltglieder C bis Cx die Schalteinrichtung A über die Koppeleinrichtung B mit dem Schaltglied C verbunden worden ist. Dann gibt die Schalteinrichtung A ein Startsignal zu dem Schaltglied C hin ab. Dieses Startsignal möge darin bestehen, daß mit Hilfe des Sendekontaktes a ein Zeichenlagewechsel von der Zeichenlage al zur Zeichenlage a0 stattfindet. Dieses Startsignal wird mit Hilfe des Empfängers D im Schaltglied C empfangen und signalisiert hier, daß die Schalteinrichtung A mit dem Schaltglied C über die Koppeleinrichtung B in Verbindung getreten ist über die Kanäle x/x′ (für die Übertragungsrichtung von der Schalteinrichtung A zum Schaltglied C) und y′/y (für die umgekehrte Übertragungsrichtung). Nachdem das Schaltglied C das Startsignal empfangen hat, gibt es ein Startquittungssignal an die Schalteinrichtung A zurück, und zwar über den Kanal y′/y. Dies geschieht ebenfalls durch Zeichenlagewechsel mit Hilfe des Sendekontaktes c. Dieser möge zunächst ein Signal in der Zeichenlage c1 zur Aussendung bringen. Durch den genannten Zeichenlagewechsel bringt er nunmehr ein Signal mit der Zeichenlage c0 zur Aussendung. Dieses Startquittungssignal in Form des genannten Zeichenlagewechsels (c1/c0) wird mit Hilfe des Empfängers E in der Schalteinrichtung A empfangen. Hierdurch erkennt die Schalteinrichtung A, daß das Schaltglied C nunmehr empfangsbereit ist für eine Vorinformation.

In der bereits erwähnten europäischen Patentanmeldung ist im einzelnen beschrieben, welche Bedeutung die Vorinformationen haben, die vor einer Nachrichtenübermittlung zwischen der Schalteinrichtung und dem betreffenden Schaltglied ausgetauscht werden. Dort ist auch eine Anordnung für den Austausch solcher Vorinformationen beschrieben sowie deren Arbeitsweise. Dies alles wird hier als bekannt vorausgesetzt. - Die Schalteinrichtung A tauscht nun vorbereitend zum Start für eine Befehlsabgabe und/oder einen Informationsabruf und -empfang Vorinformationen mit dem betreffenden Schaltglied C aus. Mit Hilfe dieser Vorinformationen wird bezüglich einer Abgabe bzw. eines Empfanges eines Befehles bzw. einer Information eine Bereitschaft oder Nichtbereitschaft in dem betreffenden Schaltglied C angezeigt. Diese Bereitschaft oder Nichtbereitschaft kann also immer in dem betreffenden Schaltglied vorliegen. Vorinformationen werden sowohl von der Schalteinrichtung A zum betreffenden Schaltglied C übertragen, als auch in umgekehrter Richtung. Die Vorinformationen zeigen also an, ob ein Befehl von der Schalteinrichtung A zu dem betreffenden Schaltglied C übertragen werden soll, oder ob eine Information von dem Schaltglied zur Schalteinrichtung hin abgerufen werden kann. Darüber hinaus kann mit Hilfe dieser Vorinformationen auch mitgeteilt werden, daß es sich um einen Befehl einer bestimmten Befehlsart unter mehreren möglichen verschiedenen Befehlsarten handelt oder um eine Information einer bestimmten Informationsart unter verschiedenen Informationsarten. Durch die Übertragung dieser Vorinformationen wird also zunächst mitgeteilt, was übermittelt werden soll oder kann und in welcher Übertragungsrichtung; ferner liegt in der Schalteinrichtung und in dem betreffenden Schaltglied eine Information darüber vor, was empfangen oder gesendet werden kann, und hieraus ergibt sich durch logische Verknüpfung letztendlich, was für eine Nachricht in welcher Übertragungsrichtung übermittelt wird. Durch Auswertung der Vorinformationen wird also eine Übermittlung eines Befehles oder einer Information eingeleitet, oder sie unterbleibt.

Wie bereits ausgeführt wurde, bildet ein angesteuertes Schaltglied das Startquittungssignal durch Wechsel der Zeichenlage von dem ersten Binärsignal c1 zu dem zweiten Binärasignal c0. Es kommt nun mehr oder weniger häufig vor, daß in den zyklisch nacheinander angesteuerten Schaltgliedern eine Information, die von diesem zu der Schalteinrichtung abzurufen wäre, nicht überhaupt vorliegt. Wenn nun außerdem in dem betreffenden Betriebsfall die Schalteinrichtung A keinen Befehl an das betreffende Schaltglied abzugeben hat, sind also Nachrichten in keiner der beiden Übertragungsrichtungen zwischen der Schalteinrichtung und diesem Schaltglied zu übermitteln. Die Erfindung zielt nun darauf ab, im Blick auf diese Betriebsfälle das Abfragegeschehen abzukürzen. Hierzu ist vorgesehen, daß jedes der Schaltglieder C bis Cx ein Nichtvorliegen einer Information in ihm durch Anlegung des zweiten Binärsignales anzeigt. Steuert nun die Schalteinrichtung A ein Schaltglied an, in dem das zweite Binärsignal c0 angelegt ist, so empfängt die Schalteinrichtung A also dieses zweite Binärsignal. Hat die Schalteinrichtung A außerdem keinen Befehl an dieses Schaltglied abzugeben, so wird ein entsprechendes Kriterium hierfür mit dem aufgenommenen zweiten Binärsignal logisch verknüpft. Aufgrund des von dem betreffenden Schaltglied erhaltenen zweiten Binärsignales, und aufgrund der Tatsache, daß die Schalteinrichtung A keinen Befehl an dieses Schaltglied abzugeben hat, verhindert die Schalteinrichtung A die Abgabe des Startsignales in der oben beschriebenen Weise und beendet damit die Ansteuerung dieses Schaltgliedes, indem die betreffende Verbindung in der Koppeleinrichtung B wieder unterbrochen wird. Die Schalteinrichtung A gibt dann einen entsprechenden Einstellbefehl über die Steuerleitung ab an die Koppeleinrichtung B, wodurch diese veranlaßt wird, eine neue Verbindung herzustellen, wodurch dann das in zyklischer Folge nächste Schaltglied angesteuert wird.

Die Schalteinrichtung A gibt im Falle der Ansteuerung eines Schaltgliedes, in dem das zweite Binärsignal c0 angelegt ist, nur dann, wenn sie selbst einen Befehl an das betreffende Schaltglied abzugeben hat, das Startsignal an dasselbe ab, und zwar in der beschriebenen Weise durch Zeichenlagewechsel mit Hilfe des Sendekontaktes a, wobei anstelle des bis dahin abgegebenen Binärsignales a1 das Binärsignal a0 abgegeben wird. Daraufhin bereitet das angesteuerte Schaltglied, z.B. C, die Abgabe des Startquittungszeichens zunächst durch Zeitlagewechsel vom zweiten Binärsignal c0 zum ersten Binärsignal c1 vor. Dies wird vom Empfänger E in der Schalteinrichtung A registriert. Dann führt das angesteuerte Schaltglied, z.B. C, die Abgabe des Startquittungssignales durch, und zwar durch erneuten Zeichenlagewechsel vom ersten Binärsignal c1 zum zweiten Binärsignal c0. Dieser Zeichenlagewechsel wird vom Empfänger E über den Kanal y′/y aufgenommen. Hieran erkennt die Schalteinrichtung A, daß das angesteuerte Schaltglied, z.B. C, das Startquittungssignal abgegeben hat. Anschließend erfolgt der Austausch der Vorinformationen in der beschriebenen und bekannten Weise. Mit Hilfe der Erfindung kann bei einer zyklischen Ansteuerung der Schaltglieder C bis Cx die Gesamtzeit für jeden Ansteuerungszyklus erheblich herabgesetzt werden, und zwar im Hinblick auf alle diejenigen Betriebsfälle, in denen bei Ansteuerung eines Schaltgliedes weder eine Information in diesem vorliegt, die von der Schalteinrichtung abzurufen wäre, noch ein entsprechender Befehl vorliegt, der von der Schalteinrichtung an das betreffende Schaltglied zu übertragen wäre. In allen diesen Betriebsfällen, in denen fürein ein Schaltglied momentan eine Nachrichtenübermittlung momentan nicht ansteht, kann Zeit gespart werden, also Zeit hinsichtlich der Dauer der Zusammenschaltung der Schalteinrichtung mit dem betreffenden Schaltglied. Mit Hilfe der Erfindung ist es möglich, die Anschaltezyklen insgesamt betrachtet zu verkürzen.

## Patentansprüche

1. Schaltungssystem für Fernmeldeanlagen, insbesondere Fernsprechvermittlungsanlagen,
- in dem eine Mehrzahl von Schalteinrichtungen untereinander Nachrichten austauschen und
- in dem eine Schalteinrichtung die anderen Schalteinrichtungen zyklisch nacheinander ansteuert und
- in dem eine angesteuerte Schalteinrichtung die Absicht, Nachrichten an die ansteuernde Schalteinrichtung abzugeben, durch Anlegung eines ersten Binärzeichens (logisch 1) anzeigt und
- in dem die ansteuernde Schalteinrichtung an eine angesteuerte Schalteinrichtung, von der sie ein erstes Binärzeichen empfangen hat, ein Startsignal abgibt, woraufhin die angesteuerte Schalteinrichtung die jeweiligen Nachrichten an die ansteuernde Schalteinrichtung übermittelt,
**dadurch gekennzeichnet,**
- daß mehrere individuelle dezentrale Schalteinrichtungen (C..Cx) nur von einer diesen gemeinsamen zentralen Schalteinrichtung (A) zyklisch angesteuert werden und
- daß die Nachrichten, die die zentrale Schalteinrichtung an die dezentralen Schalteinrichtungen abzugeben vermag, durch Befehle gegeben sind und
- daß die Nachrichten, die die dezentralen Schalteinrichtungen an die zentrale Schalteinrichtung abzugeben vermögen, durch Informationen gegeben sind und
- daß die zentrale Schalteinrichtung mit jeder der dezentralen Schalteinrichtungen zum Start für eine Befehlsabgabe und/oder einen Informationsabruf und Empfang Vorinformationen austauscht, durch die bezüglich einer Abgabe bzw. eines Empfanges eines Befehles bzw. einer Information eine Bereitschaft oder Nichtbereitschaft angezeigt wird und durch deren Auswertung eine Übermittlung eines Befehles oder einer Information gestartet wird oder unterbleibt, wobei eine mit einem Startsignal angesteuerte dezentrale Schalteinrichtung bei einer Bereitschaft zum Empfang eines Befehles ein Startquittungssignal an die zentrale Schalteinrichtung zurückgibt und
- daß die zentrale Schalteinrichtung die jeweilige Ansteuerung einer dezentralen Schalteinrichtung beendet und dann die in zyklischer Folge nächste dezentrale Schalteinrichtung ansteuert, wenn die gerade angesteuerte dezentrale Schalteinrichtung durch Anlegen eines zweiten Binärzeichens (logisch 0) ein Nichtvorliegen einer Information zur Abgabe an die zentrale Schalteinrichtung anzeigt und die zentrale Steuereinrichtung keine Befehle an diese dezentrale Schalteinrichtung abzugeben hat und
- daß die zentrale Schalteinrichtung im Falle der Ansteuerung einer dezentralen Schalteinrichtung, in der das zweite Binärsignal angelegt ist, nur dann, wenn sie selbst einen Befehl an die betreffende dezentrale Schalteinrichtung abzugeben hat, das Startsignal abgibt, woraufhin die angesteuerte dezentrale Schalteinrichtung die Abgabe des Startquittungssignales zunächst durch Zeichenlagewechsel vom zweiten Binärsignal zum ersten Binärsignal vorbereitet und dann durch erneuten Zeichenlagenwechsel vom ersten Binärsignal zum zweiten Binärsignal durchführt.

## Claims

1. A circuit system for telecommunication installations, particularly telephone exchanges,
- in which a plurality of switching devices exchange messages with one another and
- in which one switching device cyclically in succession activates the other switching devices and
- in which an activated switching device indicates the intention of outputting messages to the activating switching device by applying a first binary character (logical 1) and
- in which the activating switching device outputs a start signal to an activated switching device from which it has received a first binary character whereupon the activated switching device transmits the respective messages to the activating switching device,
characterised in that
- a number of individual decentralised switching devices (C..Cx) are only cyclically activated by a central switching device (A) common to these and
- the messages which the central switching device is capable of outputting to the decentralised switching devices are given by commands and
- the messages which the decentralised switching devices are capable of outputting to the central switching device are given by information items and
- the central switching device initially exchanges preinformation items for a command output and/or an information retrieval and reception with each of the decentralised switching devices, by means of which preinformation items a readiness or non-readiness is indicated with respect to an output or a reception of a command or an information item and by the evaluation of which a transmission of a command or of an information item is started or does not take place, during which process a decentralised switching device which is activated by means of a start signal returns a start acknowledgment signal to the central switching device in the event of a readiness for reception of a command and that
- the central switching device ends the respective activation of a decentralised switching device and then activates the next decentralised switching device in cyclic sequence when the decentralised switching device currently activated indicates a non-presence of an information item for output to the central switching device by applying a second binary character (logical 0) and the central control device does not have any commands to be output to this decentralised switching device and
- the central switching device, in the case of the activation of a decentralised switching device in which the secondary binary signal is applied, only outputs the start signal when it itself has to output a command to the relevant decentralised switching device whereupon the activated decentralised switching device prepares the outputting of the start acknowledgment signal, initially by changing the character position from the second binary signal to the first binary signal, and then by carrying it out by a new change of character position from the first binary signal to the second binary signal.

## Revendications

1. Montage pour des installations de télécommunications, notamment pour des installations de commutation téléphonique, dans lequel
- une multiplicité de dispositifs de commutation échangent des informations entre eux, et
- un dispositif de commutation commande successivement, de façon cyclique, les autres dispositifs de commutation, et
- un dispositif de commutation commandé indique, moyennant l'application d'un premier signal binaire (1 logique), l'intention d'envoyer des informations au dispositif de commutation exécutant la commande, et
- le dispositif de commutation exécutant la commande envoie un signal de démarrage à un dispositif de commutation commandé, dont il a reçu un premier signal binaire, à la suite de quoi le dispositif de commutation commandé retransmet les informations respectives au dispositif de commutation effectuant la commande,
caractérisé par le fait
- que plusieurs dispositifs individuels décentralisés de commutation (C...Cx) sont commandés cycliquement uniquement par un dispositif central de commutation (A) commun à ces dispositifs, et
- que les informations, que le dispositif central de commutation peut envoyer au dispositif décentralisé de commutation, sont déterminées par des instructions, et
- que les informations que les dispositifs décentralisés de commutation peuvent envoyer au dispositif central de commutation, sont déterminées par des informations, et
- que le dispositif central de commutation échange avec chacun des dispositifs décentralisés de commutation, pour faire démarrer la délivrance d'une instruction et/ou une réception d'informations, des informations préalables, grâce auxquelles un état prêt ou un état non prêt est affiché en ce qui concerne la délivrance ou la réception d'une instruction ou d'une information, et dont l'évaluation fait démarrer ou interrompt une transmission d'une instruction ou d'une information, un dispositif décentralisé de commutation, commandé par un signal de démarrage, renvoyant, dans le cas de l'état prêt pour la réception d'une instruction, un signal d'accusé de réception au dispositif central de commutation, et
- que le dispositif central de commutation arrête la commande respective d'un dispositif décentralisé de commutation, puis commande le dispositif décentralisé de commutation immédiatement suivant dans la suite cyclique, lorsque le dispositif décentralisé de commutation précisément commandé indique, par application d'un second signe binaire (0 logique), l'absence d'une information pour sa délivrance au dispositif central de commutation et que le dispositif central de commutation ne doit appeler aucune instruction dans ce dispositif décentralisé de commutation, et
- que le dispositif central de commutation délivre le signal de démarrage dans le cas de la commande d'un dispositif décentralisé de commutation, dans lequel le second signal binaire est présent, uniquement lorsque le dispositif central de commande lui-même doit délivrer une instruction au dispositif décentralisé considéré de commutation, à la suite de quoi le dispositif décentralisé de commutation commandé prépare la délivrance du signal d'accusé de réception tout d'abord par commutation de la position du second signal binaire sur le premier signal binaire, puis exécute une nouvelle commutation de la position du premier signal binaire sur le second signal binaire.
